# EUROPÄISCHE PATENTSCHRIFT

(11) **EP 0 810 126 B1**
(45) Veröffentlichungstag und Bekanntmachung des Hinweises auf die Patenterteilung: **04.04.2001**
(21) Anmeldenummer: 97107938.9
(22) Anmeldetag: 15.05.1997
(51) Int. Cl.: B60R 21/16

(54) **Gassack**
Airbag
Sac de sécurité gonflable

(30) Priorität: 31.05.1996 DE 29609703 U
(43) Veröffentlichungstag der Anmeldung: 03.12.1997
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Kitzhofer, Thomas, Dipl.-Ing.

(56) Entgegenhaltungen:
- EP-A- 0 670 247
- WO-A-95/03953
- US-A- 5 413 378
- US-A- 5 460 405
- US-A- 5 492 363

## Beschreibung

Die Erfindung betrifft einen Gassack für ein Fahrzeuginsassen-Rückhaltesystem, mit mindestens einer im Querschnitt veränderbaren Ausströmöffnung und mehreren, in aufgeblasenem Zustand des Gassacks im Bereich der Ausströmöffnung übereinanderliegenden Gewebeschichten, wobei wenigstens eine innere Gewebeschicht eine Öffnung aufweist, die die Ausströmöffnung mit definiert, und eine äußere Gewebeschicht abhängig vom Gassackinnendruck relativ zur inneren reversibel so verschoben werden kann, daß durch Überdeckung der Gewebeschichten der Querschnitt der Ausströmöffnung verändert wird.

Derartige Gassäcke sind in der US 5 492 363 A und der EP 0 670 247 A beschrieben. Die US 5 492 363 A zeigt einen Gassack, der eine Ausströmöffnung in der äußeren Gewebeschicht aufweist, wobei der Querschnitt der Ausströmöffnung abhängig vom Gassackinnendruck verändert wird. Hierzu ist an der Innenseite der eine Öffnung aufweisenden äußeren Gewebeschicht eine elastische Membrane angebracht, die bei geringem Gassackinnendruck eine Falte in der äußeren Gewebeschicht hervorruft. Bei hohem Gassackinnendruck wird die Membrane gespannt, und innere und äußere Gewebeschicht, wobei die innere Gewebeschicht die Membrane bildet, liegen aneinander an. Die elastische Membrane als innere Gewebeschicht schließt damit die Öffnung in der äußeren Gewebeschicht. Bei geringem Gassackinnendruck strömt Gas durch dafür vorgesehene Bereiche seitlich an der Membrane vorbei und über die Falte ins Freie ab.

Auch die EP 0 670 247 A zeigt einen Gassack mit einer Ausströmöffnung, deren Querschnitt durch ein aufgenähtes elastisches Gewebestück abhängig vom Gassackinnendruck verändert wird. Hier wird bei zunehmendem Innendruck des Gassacks die zunächst geschlossene Ausströmöffnung durch die Dehnung und die damit verbundene Verringerung der Breite des elastischen Gewebestücks geöffnet.

Bei beiden im Stand der Technik beschriebenen Gassäcken läßt sich weder der Querschnitt der Ausströmöffnung selbst, noch dessen Verlauf bei Veränderung des Gassackinnendrucks eindeutig vorhersagen, da die Öffnung durch ein elastisches Gewebestück mit definiert wird und somit die Verzerrung der Längsränder der Membrane bei ansteigendem Gassackinnendruck den Durchmesser der Ausströmöffnungen mitbestimmt. Ebenso kann es bei beiden im Stand der Technik beschriebenen Gassäcken in bestimmten Bereichen des Gassackinnendrucks zu einem als Flattern bezeichneten periodischen Öffnen und Schließen der Ausströmöffnungen kommen, was eine eindeutige Aussage über den Querschnitt der Ausströmöffnungen für diesen Druckbereich unmöglich macht.

Aufgabe der Erfindung ist es, einen Gassack zu schaffen, bei dem der Querschnitt der Ausströmöffnungen und seine Veränderung mit dem Gassackinnendruck eindeutig vorbestimmt werden kann und reproduzierbar ist.

Bei einem Gassack der eingangs genannten Art wird dies erfindungsgemäß dadurch erreicht, daß alle übereinanderliegenden Gewebeschichten Öffnungen anweisen, die sich abhängig vom Gassackinnendruck relativ zueinander verschieben und die Überdeckung der Öffnungen die Ausströmöffnung bildet, daß in aufgeblasenem Zustand die Gewebeschichten im Bereich der Ausströmöffnung aneinander anliegen und daß wenigstens ein elastisches Band außerhalb des Bereichs der Öffnungen vorgesehen und an einer Gewebeschicht befestigt ist und diese außerhalb des Bereichs der Öffnungen bei geringem Gassackinnendruck rafft. Mit zunehmendem Gassackinnendruck dehnt sich dann das elastische Band, so daß eine reversible Relativbewegung zwischen den Gewebeschichten erfolgen kann, wodurch sich der Überdekkungsgrad der Öffnungen und der Querschnitt der Ausströmöffnung proportional zur Änderung des Gassackinnendrucks mit verändern.

Beim Gassack nach der Erfindung kann die Ausströmöffnung geöffnet und wieder geschlossen werden, somit ist die Änderung des Querschnitts der Ausströmöffnung reversibel. Die Erfindung sieht vor, daß die aufeinanderliegenden Gewebeschichten, das heißt alle aufeinanderliegenden Gewebeschichten, Öffnungen haben und die Überdeckung der Öffnungen die Ausströmöffnung definiert. Die Gewebeschichten sind jedoch nicht durch ein elastisches Band selbst gebildet, denn das elastische Band ist außerhalb des Bereichs der Öffnungen vorgesehen. Das bedeutet, daß die Gewebeschichten im Bereich der Öffnungen aneinander anliegen, ohne daß zum Beispiel die äußere Lage Falten aufweisen rnuß, um die Ausströmöffnung überhaupt Freizulegen, wie dies im Stand der Technik zwingend der Fall ist.

Bei der Erfindung wird die Ausströmöffnung also durch straff aneinanderliegende, nichtelastische Gewebeschichten definiert, so daß stabile Ränder die Ausströmöffnung definieren.

Beim erfindungsgemäßen Gassack ist es möglich, lediglich durch unterschiedliche Anordnungen der sich zueinander verschiebenden Gewebelagen festzulegen, ob sich die Ausströmöffnung bei höherem Gassackinnendruck öffnen oder schließen soll, ohne daß grundlegend andere Teile verwendet werden müssen. Darüber hinaus erlaubt es das Konzept des erfindungsgemäßen Gassacks, ohne Bauteiländerungen auch Ausströmöffnungen vorzusehen, die sich nicht nur von einem geöffneten in einen geschlossenen Zustand, oder umgekehrt, sondern auch von einem teilweise bis in einen vollständig geöffneten Zustand, oder umgekehrt, ändern lassen.

Damit kann der Gassack an das Gewicht des Fahrzeuginsassen angepaßt werden, so daß er z.B. bei leichteren Insassen weicher ist, während bei großem Körpergewicht ein harter Gassack vorhanden ist, um ein Durchschlagen des Gassacks zu vermeiden.

Außerdem erlaubt es der Aufbau des Gassacks dem Hersteller, mit im wesentlichen dem gleichen Aufbau des Gassacks unterschiedliche Verläufe der Querschnittsänderung der Ausströmöffnung über den Gassackinnendruck zu erzielen. Bei gleichbleibendem Konzept ist es möglich, unterschiedliche Gassäcke herzustellen, die sich bei höherem Gassackinnendruck z.B. entweder öffnen oder schließen.

Eine einfache Befestigung der Gewebeschichten aneinander kann dadurch erreicht werden, daß sie durch die ohnehin vorgesehene Umfangsnaht am Einblasmund des Gassacks miteinander vernäht sind. Die Umfangsnaht kann auch als Befestigung für das elastische Band dienen.

Beide Gewebeschichten müssen nicht großflächig ausgebildet sein, denn es reicht bereits aus, wenn eine Gewebeschicht den Gassack als solchen bildet und die andere Gewebeschicht streifenförmig ausgebildet ist und damit keine direkte Rückhaltefunktion für den Fahrzeuginsassen ausübt, sondern lediglich die Änderung des Querschnitts der Ausströmöffnung ermöglicht.

Weiter schafft die Erfindung ein Rückhaltesytem für Fahrzeuginsassen mit einem erfindungsgemäßen Gassack und einem mehrstufigen Gasgenerator zur Erzeugung unterschiedlicher Gassackinnendrücke, abhängig vom Fahrzeugaufprall und/oder der Konstitution des Fahrzeuginsassen. Über den Gassackinnendruck kann damit der Querschnitt der Ausströmöffnungen und damit der Zustand des Gassacks nach Beginn des Aufblasens gesteuert werden. Faktoren, abhängig von denen der Gassackinnendruck gesteuert werden kann, sind z.B. Aufprallintensität und das Gewicht des Fahrzeuginsassen, die über entsprechende Sensoren erfaßt werden müssen.

Weitere Merkmale und Vorteile der Erfindung ergeben sich aus der folgenden Beschreibung und aus den Zeichnungen, auf die Bezug genommen wird. In den Zeichnungen zeigen:
- Fig. 1 eine stilisierte Schnittansicht des erfindungsgemäßen Gassacks gemäß einer bevorzugten Ausführungsform mit an den Gewebeschichten angenähten elastischen Bändern,
- Fig. 2 eine vergrößerte Ansicht des in Fig. 1 mit X gekennzeichneten Bereichs, und
- Fig. 3a bis 3c die Änderung des Querschnitts der Austrittsöffnungen des in den Figuren 1 und 2 gezeigten Gassacks bei zunehmendem Gassackinnendruck.

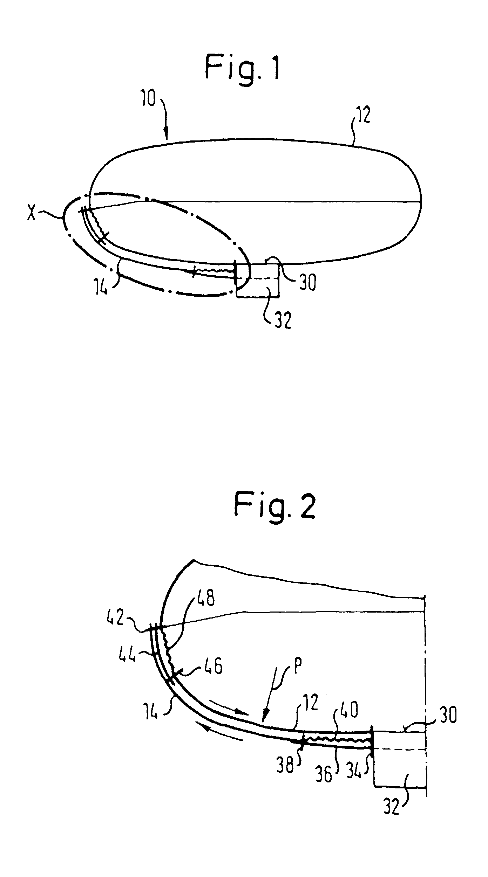

In den Figuren ist eine bevorzugte Ausführungsform eines Gassacks 10 gezeigt, der beispielsweise in der Nabe eines Fahrzeuglenkrads oder im Armaturenbrett im Bereich des Beifahrers angeordnet sein kann. Der Gassack 10 besteht aus einer zwei Teile umfassenden Gewebeschicht 12, die für sich einen vollständigen Gassack bildet, und einer streifenförmig ausgebildeten, äußeren Gewebeschicht 14, die schichtartig an der inneren Gewebeschicht 12 anliegt. In dem in Fig. 1 gezeigten aufgeblasenen Zustand des Gassacks 10 liegt die äußere Gewebeschicht 14 vollständig gespannt an der inneren Gewebeschicht 12 an, wobei zur Unterscheidung der beiden Schichten in den Figuren 1 und 2 ein nicht vorhandener seitlicher Abstand angegeben ist.

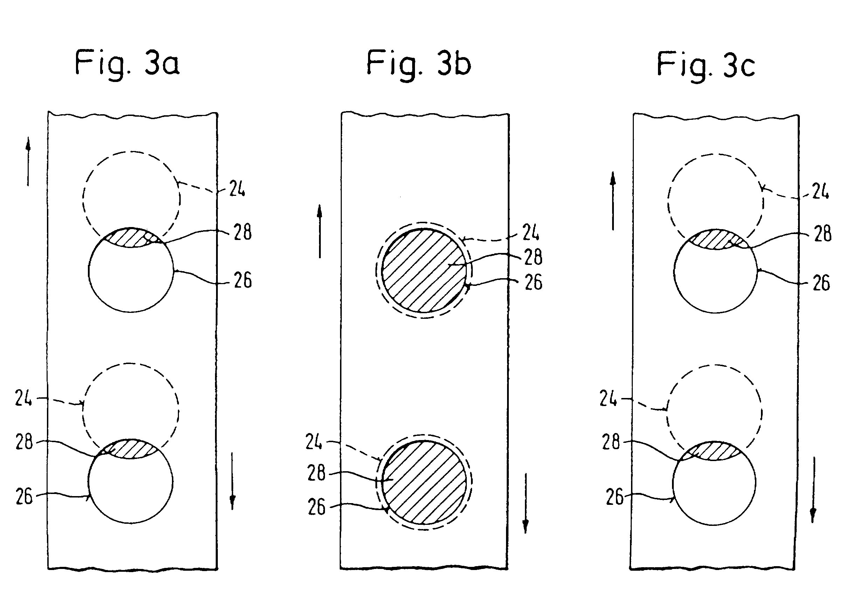

Der Gassack 10 zeichnet sich durch Ausströmöffnungen 28 aus, deren Querschnitt stufenlos und reversibel, abhängig vom Gassackinnendruck geändert werden kann. Der Einblasmund 30, der die Verbindung zu einem mehrstufigen Gasgenerator 32 bildet, weist eine Umfangsnaht 34 auf. Ein im Bereich ihres Randes an die äußere Gewebeschicht 14 angelegtes elastisches Band 36 ist über die Unifangsnaht 34 mit der inneren und der äußeren Gewebeschicht 12, 14 verbunden. Das Band 36 ist relativ kurz im Verhältnis zu der äußeren Gewebeschicht 14 und ist an seinem der Umfangsnaht 34 gegenüberliegenden Ende durch eine Naht 38 nur mit der äußeren Gewebeschicht 14 und so mit ihr verbunden, daß es die äußere Gewebeschicht 14 zwischen den Nähten 34 und 38 zusammenzieht und sich Falten 40 ergeben. Am gegenüberliegenden Ende der äußeren Gewebeschicht 14 ist diese durch eine Naht 42 mit einem weiteren elastischen Band 44 und der inneren Gewebeschicht 12 verbunden. Das elastische Band 44 erstreckt sich zwischen den Gewebeschichten 12 und 14 in Richtung zum elastisehen Band 36, ohne dies zu erreichen. An seinem, der Naht 42 entgegengesetzten Ende ist es durch eine Naht 46 mit der inneren Gewebeschicht 12 verbunden. Das elastische Band 44 zieht den Bereich der Gewebeschicht 12 zwischen den Nähten 42 und 46 zusammen, so daß sich in diesem Bereich Falten 48 ergeben In dem in den Figuren 1 und 2 gezeigten Zustand des Gassacks 10, bei dem ein geringer Gassackinnendruck herrscht, überdecken sich die Öffnungen 24 und 26 in der inneren Gewebeschicht 12 bzw. der äußeren Gewebeschicht 14, wie in Fig. 3a gezeigt, teilweise, so daß Ausströmöffnungen 28 mit geringem Querschnitt gebildet werden (schraffiert gezeigt). Der Querschnitt der Ausströmöffnungen 28 kann stufenlos und reversibel, abhängig vom Gassackinnendruck geändert werden.

Die Funktionsweise des Gassacks 10 wird nun anhand der Figuren 1 bis 3c erläutert. Bei einem Fahrzeugaufprall wird pyrotechnisches Material im Gasgenerator 32 gezündet, so daß Gas erzeugt wird, welches über den Einblasmund 30 in das Innere des Gassacks 10 gelangt und diesen bis in den in den Figuren 1, 2 und 3a gezeigten Zustand aufbläst. Über die Ausströmöffnungen 28 mit relativ geringem Querschnitt strömt dann Gas in die Umgebung. Beim Aufprall des Fahrzeuginsassen auf den Gassack 10 entsteht ein höherer Gassackinnendruck P, der dazu führt, daß die elastischen Bänder 36 und 44 weiter gedehnt werden und die Falten 40 und 48 zumindest teilweise verschwinden. Damit ergibt sich eine Verschiebung der Gewebeschichten 12 und 14 relativ zueinander, wie dies durch Pfeile in Fig. 2 angedeutet ist. Aufgrund der Relativbewegung verschieben sich auch die Öffnungen 24 und 26 zueinander, so daß die Ausströmöffnungen 28 einen größeren Querschnitt haben. Die relativ großen Ausströmöffnungen 28 sorgen dafür, daß der Gassack 10 relativ weich ist, wenn der Fahrzeuginsasse zu Beginn des Eintauchens in den Gassack 10 dessen Innendruck ansteigen läßt. Anschließend jedoch, wenn der größte Teil des Impulses des Fahrzeuginsassen vom Gassack 10 aufgenommen worden ist und der Innendruck wieder abfällt, ziehen sich die Bänder 36 und 44 wieder zusammen und der Querschnitt der Ausströmöffnungen 28 wird verkleinert Dies hat den Vorteil, daß nicht zu schnell so viel Gas ausströmen kann, daß der Gassack 10 vorzeitig zusammenfällt.

.Die gezeigte Ausführungsform des Gassacks 10 kann auch Teil eines kompletten Fahrzeuginsassen-Rückhaltesystems sein, bei dem der Innendruck des Gassacks 10 über den mehrstufigen Gasgenerator 32 steuerbar ist. Über den Gassackinnendruck ist indirekt auch der Querschnitt der Ausströmöffnungen 28 steuerbar, so daß der Gassack 10 für unterschiedlich konzipierte Abläufe z.B. abhängig vom Gassackvolumen und den zu bestimmten Zeitpunkten nach einem Aufprall gewünschten Gassackinnendrücken einsetzbar ist. Zum Beispiel kann durch ein nicht dargestelltes Abtastsystem im Fahrzeug als Teil eines Rückhaltesystems, das den Gassack 10 und den Gasgenerator 32 umfaßt, das Gewicht des Fahrzeuginsassen erfaßt werden und die vom Gasgenerator 32 zu erzeugende Gasmenge in Abhängigkeit vom Gewicht gesteuert werden. Die erfolgt beispielsweise dadurch, daß unterschiedlich viele Stufen des Gasgenerators 32 aktiviert werden.
Die bevorzugte Ausführungsform des Gassacks 10 kann z.B. auch so in ein Rückhaltesystem integriert sein, daß, umgekehrt zu den Figuren 3a bis 3c, die Ausströmöffnungen 28 beim höchsten Gassackinnendruck vollständig geschlossen sind oder einen geringen Querschnitt aufweisen, um den Gassack 10 hart zu machen, wogegen sie bei geringerem Gassackinnendruck teilweise oder vollständig offen sein können. Dies kann zum Beispiel dann sinnvoll sein, wenn der Gassack 10 in einem Rückhaltesystem eingesetzt werden soll, das unabhängig vom Gewicht des Fahrzeuginsassen arbeitet und vorsieht, das bei hohem Gassackinnendruck, wenn z.B. der Fahrzeuginsasse in den Gassack taucht, die Ausströmöffnung geschlossen wird, um ein zu starkes Ausströmen von Gas aus dem Gassack 10 zu verhindern.

Das Ausströmverhalten des Gases aus dem Gassack 10 kann damit durch Lage und Größe der Abströmöffnungen sowie der Rückstellkraft der Bänder 36 und 44 oder der Festigkeit der Reißnaht 18 beliebig eingestellt werden. Es können unterschiedliche Gassäcke 10 ohne Teileänderungen geschaffen werden, z.B. indem lediglich die äußere Gewebeschicht 14 an einer geringfügig anderen Stelle an der inneren Gewebeschicht 12 befestigt wird.

## Patentansprüche

1. Gassack (10) für ein Fahrzeuginsassen-Rückhaltesystem, mit mindestens einer im Querschnitt veränderbaren Ausströmöffnung (28) und mehreren, in aufgeblasenem Zustand des Gassacks im Bereich der Ausströmöffnung (28) übereinanderliegenden Gewebeschichten (12, 14), wobei wenigstens eine innere Gewebeschicht (12) eine Öffnung (24) aufweist, die die Ausströmöffnung (28) mit definiert, und eine äußere Gewebeschicht (14) abhängig vom Gassackinnendruck relativ zur inneren reversibel so verschoben werden kann, daß durch Überdeckung der Gewebeschichten (12, 14) der Querschnitt der Ausströmöffnung (28) verändert wird,
dadurch gekennzeichnet, daß alle übereinanderliegenden Gewebeschichten (12, 14) Öffnungen (24, 26) aufweisen, die sich abhängig vom Gassackinnendruck relativ zueinander verschieben und die Uberdeckung der Öffnungen (24, 26) die Ausströmöffnung (28) bildet, daß in aufgeblasenem Zustand die Gewebeschichten (12, 14) im Bereich der Ausströmöffnungen (28) aneinander anliegen und daß wenigstens ein elastisches Band (36, 44) außerhalb des Bereichs der Öffnungen (24, 26) vorgesehen und an einer Gewebeschicht (12, 14) befestigt ist und diese außerhalb des Bereichs der Öffnungen (24, 26) bei geringem Gassackinnendruck rafft.

2. Gassack (10) nach Anspruch 1, dadurch gekennzeichnet, daß das elastische Band (36, 44) mit zwei seiner gegenüberliegenden Enden an einer Gewebeschicht (12, 14) befestigt ist und diese bei geringem Gassackinnendruck zwischen seinen Enden verkürzt und dadurch rafft.

3. Gassack (10) nach Anspruch 1 oder 2, dadurch gekennzeichnet, daß jeweils ein elastisches Band (36, 44) zum Raffen einer Gewebeschicht (12, 14) vorgesehen ist.

4. Gassack (10) nach Anspruch 3, dadurch gekennzeichnet, daß die elastischen Bänder (36, 44) der Gewebeschichten (12, 14) an relativ zu den Öffnungen (24, 26) gegenüberliegenden Stellen an den Gewebeschichten (12, 14) befestigt sind.

5. Gassack (10) nach einem der vorhergehenden Ansprüche, dadurch gekennzeichnet, daß die äußere Gewebeschicht (14) ein an der inneren Gewebeschicht (12) befestigter Gewebestreifen ist, daß an entgegengesetzten Enden des Gewebestreifens jeweils ein elastisches Band (36, 44) so vorgesehen ist, daß ein Band (36) an einem Ende des Gewebestreifens die äußere (14) und ein Band (44) am anderen Ende die innere Gewebeschicht (12) bei geringem Gassackinnendruck rafft.

6. Gassack (10) nach einem der vorhergehenden Ansprüche, dadurch gekennzeichnet, daß die äußere Gewebeschicht (14) ein mit ihren kurzen Seiten an der inneren Gewebeschicht (12) befestigter Gewebestreifen ist.

7. Gassack (10) nach einem der vorhergehenden Ansprüche, dadurch gekennzeichnet, daß die innere Gewebeschicht (12) in aufgeblasenem Zustand des Gassacks und bei niedrigem Gassackinnendruck Falten aufweist.

8. Gassack (10) nach einem der vorhergehenden Ansprüche, dadurch gekennzeichnet, daß die äußere Gewebeschicht (14) im aufgeblasenen Zustand und bei niedrigem Gassackinnendruck im Bereich der Öffnungen (24, 26) gespannt ist und an der inneren Gewebeschicht (12) anliegt.

9. Gassack (10) nach einem der vorhergehenden Ansprüche, dadurch gekennzeichnet, daß die Ausströmöffnung (28) ab einem gewissen Gassackinnendruck geöffnet oder geschlossen ist.

10. Gassack (10) nach einem der vorhergehenden Ansprüche, dadurch gekennzeichnet, daß der Querschnitt der Ausströmöffnung (28) mit höherem Gassackinnendruck zunimmt.

11. Gassack (10) nach einem der vorhergehenden Ansprüche, dadurch gekennzeichnet, daß die Gewebeschichten (12, 14) durch eine Umfangsnaht (34) am Einblasmund (30) des Gassacks (10) miteinander vernäht sind.

12. Gassack nach Anspruch 11, dadurch gekennzeichnet, daß die Umfangsnaht (34) am Einblasmund (30) auch zur Befestigung eines elastischen Bandes (36) dient.

13. Rückhaltesystem für Fahrzeuginsassen, gekennzeichnet durch einen Gassack (10) nach einem der vorhergehenden Ansprüche und einen mehrstufigen Gasgenerator (32) zur Erzeugung unterschiedlicher Gassackinnendrücke, abhängig vom Fahrzeugaufprall und/oder der Konstitution des Fahrzeuginsassen.

14. Rückhaltesystem nach Anspruch 13, dadurch gekennzeichnet, daß der Gasgenerator (32) so gesteuert wird, daß er bei überdurchschnittlich schweren Fahrzeuginsassen einen höheren Gassackinnendruck erzeugt.

## Claims

1. A gas bag (10) for a vehicle occupant restraint system, comprising at least one outflow opening (28) of variable cross-section and a plurality of fabric layers (12, 14) which in the inflated condition of the gas bag lie one above the other in the vicinity of the outflow opening (28), at least one inner fabric layer (12) having an opening (24) which co-defines the outflow opening (28), and an outer fabric layer (14) being reversibly movable relative to the inner fabric layer in dependence on the internal pressure of the gas bag, so that the cross-section of the outflow opening (28) is varied by an overlap of the fabric layers (12, 14),
characterized in that all superimposed fabric layers (12, 14) have openings (24, 26) which move relative to each other in dependence on the internal pressure of the gas bag, the overlap of the openings (24, 26) forming the outflow opening (28), that in the inflated condition the fabric layers (12, 14) rest against each other in the vicinity of the outflow openings (28), and that at least one elastic strap (36, 44) is provided outside the area of the openings (24, 26) and is attached to a fabric layer (12, 14) and gathers the same outside the area of the openings (24, 26) in the case of a low internal pressure of the gas bag.

2. The gas bag (10) as claimed in claim 1, characterized in that the elastic strap (36, 44) is attached to a fabric layer (12, 14) with two of its opposite ends and shortens and thereby gathers said fabric layer between its ends in the case of a low internal pressure of the gas bag.

3. The gas bag (10) as claimed in claim 1 or 2, characterized in that one elastic strap (36, 44) is each provided for gathering one fabric layer (12, 14).

4. The gas bag (10) as claimed in claim 3, characterized in that the elastic straps (36, 44) of the fabric layers (12, 14) are attached to the fabric layers (12, 14) at opposite areas relative to the openings (24, 26).

5. The gas bag (10) as claimed in any of the preceding claims, characterized in that the outer fabric layer (14) is a strip of fabric attached to the inner fabric layer (12), that on opposite ends of the strip of fabric an elastic strap (36, 44) is each provided such that in the case of a low internal pressure of the gas bag a strap (36) at one end of the strip of fabric gathers the outer fabric layer (14) and a strap (44) at the other end gathers the inner fabric layer (12).

6. The gas bag (10) as claimed in any of the preceding claims, characterized in that the outer fabric layer (14) is a strip of fabric attached to the inner fabric layer (12) with its short sides.

7. The gas bag (10) as claimed in any of the preceding claims, characterized in that the inner fabric layer (12) has folds in the inflated condition of the gas bag and in the case of a low internal pressure of the gas bag.

8. The gas bag (10) as claimed in any of the preceding claims, characterized in that in the inflated condition and in the case of a low internal pressure of the gas bag the outer fabric layer (14) is tensioned in the vicinity of the openings (24, 26) and rests against the inner fabric layer (12).

9. The gas bag (10) as claimed in any of the preceding claims, characterized in that from a certain internal pressure of the gas bag onwards the outflow opening (28) is open or closed.

10. The gas bag (10) as claimed in any of the preceding claims, characterized in that the cross-section of the outflow opening (28) increases with increasing internal pressure of the gas bag.

11. The gas bag (10) as claimed in any of the preceding claims, characterized in that the fabric layers (12, 14) are sewn to each other by a peripheral seam (34) at the inflation mouth (30) of the gas bag (10).

12. The gas bag as claimed in claim 11, characterized in that the peripheral seam (34) at the inflation mouth (30) also serves for attachment of an elastic strap (36).

13. A restraint system for vehicle occupants, characterized by a gas bag (10) as claimed in any of the preceding claims and by a multi-stage gas generator (32) for generating different internal pressures of the gas bag in dependence on the vehicle impact and/or the constitution of the vehicle occupants.

14. The restraint system as claimed in claim 13, characterized in that the gas generator (32) is controlled such that for vehicle occupants having an above-average weight it generates a higher internal pressure of the gas bag.

## Revendications

1. Coussin à gaz (10) pour un système de retenue de passagers de véhicule, comportant au moins un orifice de sortie (28) de section transversale variable et plusieurs couches de tissu (12, 14) superposées dans la zone de l'orifice de sortie (28), à l'état gonflé du coussin à gaz, au moins une couche de tissu intérieure (12) présentant une ouverture (24) qui définit en même temps l'orifice de sortie (28), et une couche de tissu extérieure (14) pouvant être déplacée de manière réversible par rapport à la couche intérieure en fonction de la pression à l'intérieur du coussin à gaz de telle sorte que la section transversale de l'orifice de sortie (28) est modifiée par le recouvrement des couches de tissu (12, 14),
caractérisé en ce que toutes les couches de tissu (12, 14) superposées présentent des ouvertures (24, 26) qui se déplacent les unes par rapport aux autres en fonction de la pression à l'intérieur du coussin à gaz et le recouvrement des ouvertures (24, 26) forme l'orifice de sortie (28), en ce qu'à l'état gonflé, les couches de tissu (12, 14) reposent les unes sur les autres dans la zone des orifices de sortie (28) et en ce qu'au moins un ruban élastique (36, 44) est prévu en dehors de la zone des ouvertures (24, 26) et est fixé à une couche de tissu (12, 14) et plisse celle-ci en dehors de la zone des ouvertures (24, 26) lorsque la pression à l'intérieur du coussin à gaz est faible.

2. Coussin à gaz (10) selon la revendication 1, caractérisé en ce que le ruban élastique (36, 44) est fixé, par deux de ses extrémités opposées, à une couche de tissu (12, 14), et, en cas de faible pression à l'intérieur du coussin à gaz, elle raccourcit ladite couche entre ses extrémités, qui est alors plissée.

3. Coussin à gaz (10) selon la revendication 1 ou 2, caractérisé en ce qu'un ruban élastique (36, 44) respectif est prévu pour plisser une couche de tissu (12, 14).

4. Coussin à gaz (10) selon la revendication 3, caractérisé en ce que les rubans élastiques (36, 44) des couches de tissu (12, 14) sont fixés aux couches de tissu (12, 14) en des points opposés par rapport aux ouvertures (24, 26).

5. Coussin à gaz (10) selon l'une quelconque des revendications précédentes, caractérisé en ce que la couche de tissu (14) extérieure est une bande de tissu fixée à la couche de tissu intérieure (12), en ce qu'à des extrémités opposées de la bande de tissu, un ruban élastique (36, 44) est prévu de telle manière qu'en cas de faible pression à l'intérieur du coussin à gaz, un ruban (36) plisse la couche de tissu extérieure (14) à une extrémité de la bande de tissu et un ruban (44) plisse la couche de tissu intérieure (12) à l'autre extrémité.

6. Coussin à gaz (10) selon l'une quelconque des revendications précédentes, caractérisé en ce que la couche de tissu extérieure (14) est une bande de tissu fixée avec ses petits côtés à la couche de tissu intérieure (12).

7. Coussin à gaz (10) selon l'une quelconque des revendications précédentes, caractérisé en ce que lorsque le coussin à gaz est à l'état gonflé et lorsque la pression à l'intérieur du coussin à gaz est faible, la. couche de tissu intérieure (12) présente des plis.

8. Coussin à gaz (10) selon l'une quelconque des revendications précédentes, caractérisé en ce que lorsque le coussin à gaz est à l'état gonflé et lorsque la pression à l'intérieur du coussin à gaz est faible, la couche de tissu extérieure (14) est tendue dans la zone des ouvertures (24, 26) et repose sur la couche de tissu intérieure (12).

9. Coussin à gaz (10) selon l'une quelconque des revendications précédentes, caractérisé en ce que l'orifice de sortie (28) est ouvert ou fermé à partir d'une pression interne déterminée du coussin à gaz.

10. Coussin à gaz (10) selon l'une quelconque des revendications précédentes, caractérisé en ce que la section transversale de l'orifice de sortie (28) augmente lorsque la pression interne de coussin à gaz est plus élevée.

11. Coussin à gaz (10) selon l'une quelconque des revendications précédentes, caractérisé en ce que les couches de tissu (12, 14) sont cousues les unes aux autres par une couture périphérique (34) ménagée sur l'embouchure d'insufflation (30) du coussin à gaz (10).

12. Coussin à gaz (10) selon la revendication 11, caractérisé en ce que la couture périphérique (34) ménagée sur l'embouchure d'insufflation (30) sert aussi à la fixation d'un ruban élastique (36).

13. Système de retenue pour passagers de véhicule, caractérisé par un coussin à gaz (10) selon l'une quelconque des revendicaions précédentes et par un générateur de gaz (32) à plusieurs étages destiné à produire différentes pressions à l'intérieur du coussin à gaz en fonction de l'impact du véhicule et/ou de la constitution des passagers du véhicule.

14. Système de retenue selon la revendication 13, caractérisé en ce que le générateur de gaz (32) est commandé de telle sorte qu'il produit une pression plus élevée à l'intérieur du véhiule lorsque les passagers du véhicule ont un poids supérieur à la moyenne.
